# EUROPEAN PATENT SPECIFICATION

(11) **EP 4 602 091 B1**
(45) Date of publication and mention of the grant of the patent: **09.09.2026**
(21) Application number: 23789540.4
(22) Date of filing: 10.10.2023
(51) Int. Cl.: C08G 59/40, C08G 59/50, C08G 59/56, C08G 59/62, C09D 163/00

(54) **LOW TEMPERATURE CURING COATING COMPOSITION**
BEI NIEDRIGER TEMPERATUR HÄRTBARE BESCHICHTUNGSZUSAMMENSETZUNG
COMPOSITION DE REVÊTEMENT DURCISSABLE À BASSE TEMPÉRATURE

(30) Priority: 11.10.2022 EP 22200904
(43) Date of publication of application: 20.08.2025
(73) Proprietor: Akzo Nobel Coatings International B.V., 1077 WW Amsterdam (NL)
(72) Inventor: MOORE, Richard, 1077 WW Amsterdam (NL); COCHRANE, Adam, 1077 WW Amsterdam (NL); MAMUJI, Jamie, 1077 WW Amsterdam (NL)
(74) Representative: Akzo Nobel IP Department
(86) International application number: PCT/EP2023/077966
(87) International publication number: WO 2024/079077

(56) References cited:
- BE-A- 799 277
- KR-B1- 102 276 827
- US-B2- 10 214 612
- DATABASE CAPLUS [online] 1 January 1992 (1992-01-01), MINE SHIGEO: "MXDA type corrosion-resistant epoxy resin coatings", XP093034812, Database accession no. 1992:450815

## Description

### Technical Field

This invention relates to coating compositions that can cure at low temperature. In particular, the invention relates to low temperature cure coatings that are suitable for use as protective liners for the internal surfaces of storage tanks and storage vessels that are used for storage or transport of water or chemicals.

### Background Art

Chemical storage vessels come into contact with a wide variety of chemical compounds. Their inner surfaces are generally provided with a coating which protects the surface from the chemical, and also protects the stored chemical itself from contamination that may be present on the surface of the storage vessel, either from corroded portions of the surface or from residual quantities of previously stored chemicals.

WO2012/119968 describes a coating composition comprising a mixture of epoxy resins, a curing agent, an accelerator or a mixture of accelerators, and one or more fillers or pigments, wherein the mixture of epoxy resins comprises 60 - 80 wt.% of an RDGE epoxy resin and 20 - 40 wt.% of an epoxy novolac resin. The coating composition is described as a tank lining composition.

WO2015/082409 relates to a method for coating metallic or concrete surfaces of chemical installations, using an epoxy-based composition which also includes an organosilane or organosiloxane.

WO2015/165808 and WO2017/068015 relate to methods for coating metallic or concrete surfaces of chemical installations, using epoxy-based compositions which include organoboron compounds.

US2020/0362195 relates to a protective coating comprising epoxy resin and one or more amine curing agents such as diaminocyclohexane.

US2017/0327684 describes a low viscosity liquid epoxy resin composition comprising two or more curing agents selected from aliphatic polyamines, modified aliphatic polyamines, cyclic amines, and secondary or tertiary amines.

US4185132 describes applying an epoxy-based road-marking to a paved surface, where a combination of a cycloaliphatic amine and an aliphatic polyfunctional amine is used.

KR10-2021-0047777 describes a solvent-free epoxy coating composition comprising a mixture of aliphatic amine resin and alicyclic amine resin.

JP2001163955 describes an epoxy resin composition comprising bis(aminomethyl)-cyclohexane or modified bis(aminomethyl)-cyclohexane, a fatty amine compound, and a curing accelerator.

CN102816502 relates to a room temperature curing coating comprising inter alia a novolac epoxy resin, a modified aromatic amine curing agent (such as cardanol aromatic polyamine curing agent) and an alicyclic amine curing agent.

WO2006/045407 relates to an ambient temperature curable epoxy resin comprising an aromatic halogenated glycidyl ether resin, a non-halogenated glycidyl ether resin and an aliphatic, cycloaliphatic or aromatic amine, that can be used in a coating.

WO2019/170563 relates to an epoxy curing agent comprising two or more amine components, one being N-(3-aminopropyl) cyclohexylamine and the other being a hydrogenated product of oligomeric structure from the 4,4'-methylenedianiline process.

WO2017/184514 relates to a two-component epoxy resin paint comprising a polyamide curing agent and at least one Mannich base curing agent, either or both of which are derived from one or more multifunctional amines comprising at least one cycloaliphatic multifunctional amine.

WO2014/093115 relates to a curable coating composition comprising at least two epoxy resins and at least one amine curing agent, where one of the epoxy resins is a 1, 4-cyclohexanedimethanol resin.

WO2011/059500 relates to a curable composition comprising an epoxy component and a hardener component, the epoxy component comprising an aromatic epoxy compound and a polymeric glycidyl ether reactive diluent, and the hardener component comprising an adduct and a Mannich base curing agent.

EP1810985 describes a curable composition comprising an epoxy resin with on average more than one epoxy group per molecule, and a curing agent comprising a reaction product of a diglycidyl- or monoglycidylether with a composition comprising a volatile monoamine and a polyamine. The curing agent also optionally comprises a polyamine and optionally a polyphenol novolac.

BE799277 relates to rapid curing epoxy-based coating compositions or moulded items comprising isophoronediamine and an aminophenol compound, in particular an aminophenol based on bisphenol A and diethylenetriamine.

The abstract of article "MXDA type corrosion-resistant epoxy resin coatings" (English translation) by Mine, Shigeo in Toso to Toryo (1992), 493, 45-58 describes a composition for the inner coating of methanol-carrying tankers comprising epoxy resin and MXDA-based Mannich type hardeners.

KR10-2276827 relates to an epoxy based anticorrosion composition suitable for construction-based substrates such as steel parts for bridges or concrete structures where curing agents that can be used include polyamines such as polyoxyethylenediamine, isophorone diamine, and Mannich base.

US10,214,612 relates to an epoxy resin composition including at least one epoxy compound and a hardener composition, where the hardener comprises 2-(2,2,6,6-tetramethylpiperidi-4-yl)propane-1,3-diamine.

A common issue faced by protective coatings is their long curing time at low temperatures, for example where the compositions will be applied at locations which experience cold conditions, for example during winter at relatively high northern or southern latitudes.

EP2159218 describes an amine composition for curing an epoxy resin, the amine composition comprising dimethyl-meta-xylylenediamine and at least one multifunctional amine. The curing temperature can be room temperature or below, for example less than or equal to 5 °C.

However, there is still a need for further protective coating compositions that can be applied at lower temperatures, but which have sufficiently low curing times to make them commercially and technically viable.

### Summary of Invention

The invention is directed to a coating composition comprising a binder component and a curing component.

The binder component comprises an epoxy resin, and the curing component comprises a cycloaliphatic amine and an aromatic Mannich base curing agent. The cycloaliphatic amine and the aromatic Mannich base curing agent each have either a primary amine group, a secondary amine group or both.

The weight ratio of aromatic Mannich base curing agent(s) to the cycloaliphatic amine curing agent(s) is at least 0.01 : 1, and is also no more than 1.7 : 1, for example no more than 1.5 : 1.

The proportion of cycloaliphatic amine curing agent(s) and aromatic Mannich base curing agent(s) is 70 wt% or more based on the total amount of curing agents in the coating composition.

The aromatic Mannich base curing agent is derived from an aldehyde, a phenolic compound and an amine comprising at least one aromatic ring.

The invention is also directed to a substrate coated with such a composition, the substrate being in embodiments an internal surface of a vessel for storage or transport of chemicals or water.

The invention is further directed to a method for coating a substrate, in which the above coating composition is applied to the substrate and cured. In embodiments, the curing temperature is 5 °C or less, for example 0 °C or less.

### Description of Embodiments

In the discussion below, reference will be made to aliphatic hydrocarbyl groups and alkyl groups. These can be linear, branched or cyclic, or can comprise both cyclic and non-cyclic portions. Aliphatic and aryl groups can also comprise substituents and/or ring heteroatoms, as set out further below.

### [Coating Composition]

The coating composition can be provided in a two-pack form, where one part (Part A) comprises a curable epoxy resin, and another part (Part B) comprises the curing agents. They can be mixed shortly before application to provide the coating composition, which will then cure to form a protective coating film.

The coating compositions of the present composition are particularly suited to low temperature application, such that they can still cure effectively at low temperatures, in particular sub-zero temperatures. Thus, they have drying times that are fast enough for use in cold temperature conditions, without sacrificing workability characteristics such as pot-life, gel times and viscosity.

The coating composition, once cured, can be a protective lining, for example a chemical resistant lining. In embodiments, it can be a protective lining for an internal surface of a fixed or mobile storage tank or vessel, including associated pipework, that is used for storing or transporting water or chemicals, e.g. liquid chemicals. Examples of fixed storage tanks or vessels include those associated with chemical manufacturing sites, crude oil processing sited (refineries), offshore crude oil production sites, and floating production, storage and offloading (FPSO) facilities. Examples of mobile tanks or vessels include road tankers, rail tankers, tanker ships and tanker barges.

### [Epoxy Resin]

The coating composition comprises at least one epoxy resin. Suitable epoxy resins include those comprising one or more aromatic rings (sometimes referred to as an aromatic epoxy resin), examples of which include phenol novolac epoxy resins, cresol novolac epoxy resins, bisphenol A epoxy resins, bisphenol S epoxy resins, and bisphenol F epoxy resins.

Examples include diglycidyl ether of bisphenol A, F or S, hydrogenated bisphenol A, F or S, condensed or extended glycidyl ethers of any of the above bisphenols (e.g. epoxy novolac resins), or hydrogenated condensed glycidyl ethers of bisphenols.

In one embodiment, the epoxy resin (or at least one of the epoxy resins) is a phenol novolac epoxy resin. Suitable phenol novolac epoxy resins include, DEN^{™} 425, DEN^{™} 431 and DEN^{™} 438 (ex DOW Chemicals), Epon^{™} 154, Epon^{™} 160, Epon^{™} 161 and Epon^{™} 162 (ex. Momentive Performance Chemicals), and Epalloy^{™} 8250 (ex. Emerald Chemical Co.). Other epoxy resins which may be used include epoxy cresol novolac resins, such as Epon^{™} 164 and Epon^{™} 165 (ex. Momentive Performance Chemicals), or bisphenol A epoxy novolac resins, such as the Epon^{™} SU range of resins.

In another embodiment, the epoxy resin (or one of the epoxy resins) is a bisphenol-based epoxy resin, for example a diglycidyl ether of a bisphenol, for example a diglycidyl ether of bisphenol A, F or S. In further embodiments, the epoxy resin (or at least one of the epoxy resins) is a bisphenol F epoxy resin such as a diglycidyl ether of bisphenol F. Suitable bisphenol F epoxy resins include DER^{™} 354 (ex. DOW Chemicals) or Epikote^{™} 862 (ex. Momentive performance Chemicals).

In embodiments, the epoxy equivalent weight of the epoxy resin is in the range of 165 - 185 g/eq. The epoxy equivalent weight is the weight of the epoxy resin required to yield one mole (or one equivalent) of epoxy functional groups.

Blends of any of the above epoxy resins may be used in combination with each other, but the epoxy phenol novolac resins or the bisphenol F epoxy resins are typically used when very high chemical resistance is required, and in embodiments they make up at least 50% of the epoxy resin, calculated on the total number of epoxy groups provided by the epoxy resin. In further embodiments, the epoxy phenol novolac resins or bisphenol F epoxy resins make up at least 60%, for example at least 70% or at least 80% of the epoxy resin, calculated on the total number of epoxy groups provided by the epoxy resin.

To minimize the solvent content of any coating composition, the epoxy resin source (e.g. epoxy phenol novolac resin or the bisphenol F epoxy resin) can have a low solvent content, e.g., below 20 wt.%, or below 10 wt.%, based on the weight of epoxy resin. In embodiments, the epoxy resin is free of solvent.

The amount of the epoxy resin(s) in the coating composition can be in the range of from 5 to 50 wt%, for example from 8 to 30 wt%.

### [Curing Agents]

The coating composition comprises two different curing agents. One is a cycloaliphatic amine curing agent, and the other is an aromatic Mannich base curing agent.

The cycloaliphatic amine curing agent can be selected from monomeric, dimeric, oligomeric, or polymeric cycloaliphatic amines, or a mixture of any two or more thereof.

Examples of monomeric cycloaliphatic amines include para-aminodicyclohexyl methane (or bis(4-aminocyclohexyl)methane, often abbreviated as PACM), 2,4'-diaminodicyclohexylmethane, 2,2'-diaminodicyclohexylmethane, 3,3'-dimethyl-4,4'-diaminodicyclohexylmethane, bis(4-amino-3-methylcyclohexyl) methane, N-cyclohexyl-1,3-propanediamine, 1,2-diaminocyclohexane, N-aminoethyl piperazine, 3-(cyclohexylamino) propylamine, piperazine, N-aminopiperazine, 4-methylcyclohexane-1,3-diamine, isophorone diamine, and 1,3-bis(aminomethyl)cyclohexane.

The cycloaliphatic amine curing agent typically comprises no aromatic moieties, e.g. it does not comprise a mixture of aliphatic and aromatic rings.

In embodiments, the cycloaliphatic amine curing agent has on average at least two active hydrogens per molecule. The amine groups typically have at least one primary or secondary amine group, and in embodiments all the amine groups are primary or secondary amine groups. An amine curing agent with more than one nitrogen atom may be termed a polyamine.

The aromatic Mannich base curing agent is a compound that can be produced by reaction of an aldehyde (typically formaldehyde), an amine, and a phenolic compound. The phenolic compound is one that comprises an aromatic ring with at least one directly bound hydroxy (-OH) substituent. It can have a single aromatic ring, such as phenol, cresol or resorcinol. Alternatively it can have more than one ring, e.g. two ring compounds such as napthol or biphenol. Typically, it comprises a single aromatic ring.

At least one amine used to form the Mannich base curing agent (or at least one of the Mannich base curing agents) comprises at least one aromatic ring, for example meta-xylylenediamine (MXDA). Therefore, the aromatic Mannich base curing agent, or at least one of the Mannich base curing agents, comprises at least two aromatic rings, for example at least one derived from the phenolic compound and at least one derived from the amine.

The coating composition can comprise more than one aromatic Mannich base curing agent comprising at least one NH group. Aromatic Mannich base curing agents can include those having at least one aromatic or aliphatic ring. They can include those where the amine can be derived from a polyamine, for example 1,4-bis(aminomethyl)benzene, 1,3-bis(aminomethyl)benzene, 1,3-bis(aminomethyl)-cyclohexane, ethylenediamie (EDA), diethylenetriamine (DETA), or triethylenetetramine (TETA)).

Although other amines can be present in the coating composition (e.g. non-cyclic aliphatic amines, or aromatic amines which are not Mannich bases), the proportion of cycloaliphatic amine(s) and aromatic Mannich base(s) constitutes 70 wt% or more of the total amount of curing agents.

Although it is possible for there to be amine-adduct curing agents (e.g. adducts between amine and epoxy compounds), in embodiments none of the curing agents are adducts.

The cycloaliphatic amine and aromatic Mannich base curing agents can be present (collectively) in the coating composition in amounts in the range of from 2 to 35 wt%, for example from 5 to 30 wt% or from 7 to 25 wt%. In embodiments, the total amount of curing agents other than cycloaliphatic amine and aromatic Mannich base curing agents in the coating composition as a whole is less than 5.0 wt%, for example being 4.9 wt% or below.

The weight ratio of aromatic Mannich base curing agent(s) to cycloaliphatic amine(s) is at least 0.01 : 1.00, and is also 1.70 : 1.00 or less. In embodiments, the weight ratio is at least 0.10 : 1.00. In embodiments, the weight ratio is no more than 1.50 : 1.00, for example no more than 1.10 : 1.00. Thus, in embodiments, the weight ratio is in the range of from 0.10:1.00 to 1.10:1.00, or from 0.15:1.00 to 1.00:1.00.

In one embodiment of the present invention, the total amount of amine curing agent present in the coating composition is such that the molar ratio (sometimes referred to as an equivalent ratio) of active hydrogens to epoxy groups in the coating composition is in the range of from 0.50:1.00 to 2.00:1.00, for example from 0.60:1.00 to 1.85:1.00, or from 0.70:1.00 to 1.35:1.00. This ratio of active hydrogen to epoxy groups enables efficient curing of the coating composition according to the invention. The term active hydrogens corresponds to N-H hydrogens, i.e. where the hydrogen is directly bonded to the nitrogen atom of an amine group. These are typically present in the curing agents (such as the cycloaliphatic amines and aromatic Mannich base curing agents) and also sometimes in crosslinking agents. Note that a primary amine group (i.e. an -NH₂ group) is considered to comprise 2 active hydrogens.

In embodiments, the weight ratio of epoxy group-containing compounds to compounds comprising a primary or secondary amine group is 2.4 : 1.0 or less, for example 2.2 : 1.0 or less. In embodiments, the weight ratio is 0.6 or more, 1.0 or more, or 1.5 or more. Example ranges include 0.6:1.0 to 2.4:1.0, 0.6:1.0 to 2.2:1.0, 1.0:1.0 to 2.4:1.0, 1.0:1.0 to 2.2:1.0, 1.5:1.0 to 2.4:1.0, and 1.5:1.0 to 2.2:1.0.

### [Organoboron Compounds]

In embodiments, the coating composition used in the present invention can comprise an organoboron compound of the formula BR^{a}₃₋ₙ(OR^{a})ₙ, wherein n is 1, 2 or 3, and each Each R^{a} is independently selected from H, C₁₋₁₂ alkyl, phenyl and phenyl substituted with 1 or more (e.g. 1 to 4) C₁₋₆ alkyl groups, with the proviso that at least one R^{a} is not H.

The alkyl groups can be cyclic or non-cyclic, or can comprise cyclic and non-cyclic portions. Non-cyclic alkyl groups or substituents can be linear or branched.

Each R^{a} can optionally be substituted with one or more substituents selected from halide, -OR^{t} and -NR^{t}₂. Each R^{t} is independently selected from H, C₁₋₆ alkyl and C₁₋₆ haloalkyl. In embodiments, R^{t} is selected from H and C₁₋₄ alkyl.

In one embodiment each R^{a} is independently selected from C₁-C₈ alkyl groups, for example C₂-C₅ alkyl groups. In other embodiments, n is 2 or 3. In embodiments, no R^{a} groups have optional substituents.

In other embodiments, the organoboron compound can be of formula R^{a}B(O₂R^{z}), where O₂R^{z} is a cyclic moiety in which the two oxygens are bound to the boron atom via a covalent bond, and R^{z} is a divalent group with a covalent bound to both oxygen atoms. R^{z} can be an optionally substituted aliphatic hydrocarbyl group having from 1 to 12 carbon atoms, which in embodiments is a non-cyclic alkyl group. The optional substituents are selected from those defined above for R^{a}. In embodiments, R^{z} has from 2 to 6 carbon atoms.

Examples of suitable organoboron compounds include triethylborate, trimethyl borate, triisopropyl borate, tributylborate, the diethylester of phenyl boronic acid and the diethylester of methylboronic acid.

The presence of organoboron compounds can improve the chemical resistance of the coating composition. By 'chemical resistance' is meant the propensity of the coating composition to absorb and subsequently desorb a chemical, solvent or other liquid cargo, whilst maintaining film integrity.

The amount of OR^{a} groups in the organoboron compound(s) provided to the coating composition can be equal to or less (on a molar basis) than the amount of 1,2-aminoalcohol groups formed from the reaction between the epoxy groups and the amines in the curing agents present in the composition.

In embodiments, the amount of organoboron compound(s) in the coating composition is in the range of from 0 to 15 wt% based on the total coating composition, for example in the range of from 0 to 10 wt% or from 0 to 5 wt%. In embodiments, when used, the amount is at least 0.1 wt%, for example at least 0.5 wt%.

### [Cross-Linking Agents]

The composition optionally comprises one or more cross-linking agents that can facilitate cross-linking of the one or more binder resins and other reactive components. They can be included in the binder component, the curing component, or both.

Typically, the cross-linking agent comprises at least two moieties that can participate in cross-linking reactions. It is typically classed separately from reactive diluents (see below), as they tend not to form a polymeric matrix of their own accord when subject to typical curing conditions.

The cross-linking agent, in embodiments, can be selected from those of formula Si(R')₄₋ₕ(OR')ₕ, where R^{a} is as defined above, and h is an integer in the range of from 1 to 4.

Each R^{c} is independently selected from optionally substituted C₁₋₂₀ aliphatic hydrocarbyl groups, optionally substituted C₆₋₁₂ aryl groups, and optionally substituted C₆₋₁₂ aryl groups having one or more C₁₋₆ hydrocarbyl groups (e.g. C₁₋₆ alkyl groups). Optional substituents are selected from halide, -OR^{t}, -NR^{t}₂, -NCO, -C(O)OR^{t}, -OC(O)R^{t}, -C(O)NR^{t}₂, -OC(O)NR^{t}₂, -NR^{t}C(O)NR^{t}₂ and -OC(O)OR^{t}. Additional optional substituents include polyether, polyamine, polyether/amine and epoxy-containing groups selected from -([CR^{t}₂]ⱼE-)ₚR^{t}, -E-([CR^{t}₂]ⱼE-)ₚR^{t} and -(CR^{t}₂)ⱼ[O(CR^{t}₂)ₖ]ₘ[CR^{t}/O\CR^{t}₂], where [CR^{t}/O\CR^{t}₂] represents an epoxy moiety.

R^{t} is as defined above. Each E is independently selected from O and NR^{t}. In embodiments, all E are O or all E are NR^{t}.

j is from 1 to 6, k is from 1 to 3, m is from 0 to 3, and p is from 1 to 30.

When h is less than 4, at least one R^{c} is or comprises either an unsaturated aliphatic hydrocarbyl group or comprises a substituent as set out above. In embodiments, the silane moiety comprises no halides or halide-containing substituents.

There can be more than one cross-linking agent present, although preferably at least one cross-linking agent has a value for h of at least 2.

In embodiments, the aliphatic hydrocarbyl groups and/or substituents in R^{c} are saturated (i.e. are alkyl) and at least one R^{c} comprises one or more additional substituents.

In embodiments, cross-linking agents of formula Si(R^{c})₄₋ₕ(OR^{a})ₕ can be in a partially hydrolysed or condensed form, for example being in dimeric or oligomeric form where two or more silicon atoms are bound via Si-O-Si bonds. In embodiments, partially hydrolysed or condensed forms comprise from 2 to 20 silicon atoms.

In embodiments, at least one R^{c} group is selected from C₁₋₆ alkyl, phenyl and C₁₋₆ alkylsubstituted phenyl, optionally comprising one or more substituents as defined above.

In embodiments, all R^{a} groups are selected from H and C₁₋₄ alkyl. In other embodiments, each R^{c} group is selected from H, and substituted C₁₋₄ alkyl. In further embodiments, the cross-linking agent can be of formula Si(OR^{a})₄, and each R^{a} is selected from H and C₁₋₄ alkyl.

In embodiments the cross-linking agent comprises an R^{c} group selected from C₁₋₄ alkyl substituted with an amine-containing substituent or an epoxy-containing substituent. In embodiments, at least one R^{c} comprises an epoxy-containing substituent. Where h is less than 3, other R^{c} groups are selected from unsubstituted C₁₋₂₀ aliphatic hydrocarbyl groups, e.g. C₁₋₆ alkyl groups.

When R^{c} contains an amine substituent, it can be of formula -(CR^{m}₂)ⱼ[NR^{m}(CR^{m}₂)ₖ]ₘNR^{m}₂ where each R^{m} is independently selected from H and C₁₋₄ alkyl, j is from 1 to 6, such as from 2 to 4, k is from 1 to 3, such as from 2 to 3, and m is from 0 to 3, for example from 0 to 2. In embodiments, all R^{m} are selected from H and C₁₋₂ alkyl, and in further embodiments only one R^{m} group is other than H.

When R^{c} contains an epoxy-group, it can be of formula -(CR^{m}₂)ⱼ[O(CR^{m}₂)ₖ]ₙ[CR^{m}/O\CR^{m}₂], where R^{m} is as defined above. In embodiments, all R^{m} are selected from H and C₁₋₂ alkyl, and in further embodiments only one R^{m} group is other than H. j is from 1 to 6, for example from 2 to 4, k is from 1 to 3, for example from 1 to 2, and n is from 1 to 3, for example from 1 to 2.

Examples of cross-linking agents include 3-aminopropyl triethoxysilane, N-[3-(trimethoxysilyl)propyl]ethylenediamine, (N,N-diethylaminomethyl)triethoxysilane, glycidyloxypropyl triethoxysilane, glycidyloxypropyl trimethoxysilane and tetraethoxysilane (TEOS), and partially hydrolysed forms thereof.

In embodiments, the cross-linking agent is an alkyl silicate or a condensate of an alkyl silicate, for example a C₁₋₆ alkyl silicate, such as a tetraethyl orthosilicate (TEOS). Condensates can be dimeric or oligomeric, for example comprising from 2 to 20 silicon atoms linked via Si-O-Si bonds.

Other examples of cross-linking agents include organocarbonates, e.g. of formula O=C(OH)_{2-z}(OR^{a})_{z}, where z is 1 or 2, and R^{a} is as defined above. In embodiments, z is 2. In embodiments, each R^{a} is an alkyl group. In further embodiments, the organocarbonate is a dialkyl carbonate, e.g. C₁₋₆ dialkyl carbonate such as dimethyl carbonate or diethyl carbonate.

In embodiments, the total content of the cross-linking agent(s) in the coating composition is in the range of from 0.1 to 30 wt%, based on the entire coating composition, for example in the range of from 0.5 to 25 wt%, or from 1 to 20 wt%.

### [Reactive Diluent]

The coating composition can optionally comprise one or more reactive diluents, which are typically liquids at room temperature and pressure (i.e. 25 °C and 1.013 bara), and are typically less viscous than the epoxy resins. They can be included in the coating composition as part of the binder component.

A reactive diluent behaves like a solvent in reducing the viscosity of a composition, but does not contribute to its solvent or VOC content because it possesses reactive groups which allow it either to bind to the coating resins, or to undergo a chemical reaction independent of the main curing reaction. They are typically of lower viscosity than the other binder components. Although they are capable of forming a polymeric matrix when subject to curing conditions, the resulting film is generally not sufficiently mechanically robust in the absence of a binder resin.

In embodiments the reactive diluent can be selected from epoxy-containing compounds which are aliphatic, or which comprise no more than one aromatic or heteroaromatic group. Specific examples of reactive diluents include phenyl glycidyl ether, C₁₋₃₀ alkyl phenyl glycidyl ethers (e.g. C₁₋₁₂ or C₁₋₅ alkyl phenyl glycidyl ethers such as methyl phenyl glycidyl ether, ethyl phenyl glycidyl ether, propyl phenyl glycidyl ether and para t-butyl phenyl glycidyl ether), and glycidyl esters of carboxylic acids (e.g. glycidyl esters of fatty acids or versatic acids such as pivalic acid or neodecanoic acid).

Further examples include glycidyl ethers of aliphatic alcohols having at least 2 hydroxy groups (sometimes collectively referred to as aliphatic polyols). The aliphatic moiety derived from the aliphatic polyol can comprise 1-16 carbon atoms. Examples include hexanediol diglycidyl ether, neopentyl glycol diglycidyl ether, trimethylolpropane triglycidyl ether, glycerol triglycidylether, pentaerythritol tetraglycidyl ether, dipentaerythritol polyglycidyl ethers, butanediol diglycidyl ether, neopentylglycol diglycidyl ether, and sorbitol glycidyl ether.

Reactive diluents can also be made by epoxidation of unsaturated fats and oils, for example unsaturated fatty acids, diglycerides or triglycerides having C₄₋₃₀ fatty acid or fatty acid ester groups. An example is Cardolite^{™} NC-513, which is made by reacting epichlorohydrin with an oil obtained from the shells of cashew nuts.

The reactive diluent can also be selected from epoxidized olefins, including dienes and polydienes. They can be C₂₋₃₀, C₆₋₂₈, C₆₋₁₈, C₁₄₋₁₆ or C₆₋₁₂ epoxidised olefins. They can comprise from 1 to 4 epoxy groups, for example 1 or 2 epoxy groups, such as 2 epoxy groups. Specific examples include diepoxyoxtane and epoxidized polybutadiene. Epoxidised polydienes such as polybutadiene can have a molecular weight in the range of from 500 to 100000, for example in the range of from 1000 to 50000, or from 2000 to 20000.

In embodiments, the reactive diluent is present in the first part (A) of a two-component coating composition, i.e. with the curable epoxy binder.

In the coating composition as a whole, the reactive diluent can be present in an amount of from 0.0 to 15.0 wt.%, for example 1.0 to 15.0 wt%, from 0.0 to 12.0 wt% or from 2.0 to 12.0 wt%. These amounts can help lower the viscosity of the coating composition, which is advantageous for high solids and low solvent compositions. However, in other embodiments, reactive diluents are not used, and are present in amounts of 5.0 wt% or less, or 3.0 wt% or less.

In embodiments, the viscosity of the reactive diluent is less than 50 cP, for example less than 30 cP, or less than 20 cP at 23°C and 50% RH. The viscosity can be measured using the cone and plate method described in ASTM D4287.

### [Catalysts/Accelerators]

One or more catalysts (or accelerators) can be used to speed up the curing agents. Examples include alcohols, phenols, carboxylic acids, sulfonic acids, and salts.

Alcohols can be selected form C₁₋₈ aliphatic compounds having 1 or more hydroxy groups, such as from 1 to 6 hydroxy groups. Examples include ethanol, 1-propanol, 2-proanol, 1-butanol, 2-butanol, t-butanol, benzyl alcohol, furfuryl alcohol, propanediol, butanediol, glycerol and sorbitol. Hydroxy groups can be the only functional group. Alternatively, there can also be other functional groups such as amino groups. For example, the alcohol can be a C₁₋₈ aliphatic aminoalcohol, for example a β-hydroxy tertiary amine, examples of which include triethanolamine, tri-isopropanolamine, and dimethylaminoethanol.

Examples of phenols include aromatic compounds comprising at least one hydroxy group bound directly to an aromatic ring. There can be one or more aromatic rings in the molecule (e.g. from 1 to 3 aromatic rings), which can be fused or unfused. Examples include phenol, di- and tri-hydric phenols, biphenols, bisphenols, and alcohols of fused aromatic rings, e.g. comprising 2 or 3 fused aromatic rings. They can be substituted with one or more substituents selected from halide (typically chloride), amino (e.g. C₁₋₁₀ alkyl amino or C₁₋₁₀ dialkyl amino), nitro, cyano, C₁₋₂₀ alkyl, C₁₋₂₀ alkenyl, and C₁₋₂₀ alkoxy. Specific examples include , 2-chlorophenol, 4-chlorophenol, 2,4-dichlorophenol, 2,4,6-trichlorophenol, 2-nitrophenol, 4-nitrophenol, 2,4-dinitrophenol, 2,4,6-trinitrophenol, 4-cyanophenol, 2,4,6-tris(dimethylaminomethyl)phenol, o-cresol, m-cresol, p-cresol, 4-ethylphenol, 4-isopropylphenol, 2,4-dimethylphenol, 3,5-dimethylphenol, nonyl phenol, eugenol, isoeugenol, cardanol, 2,2'-dihydroxybiphenyl, 2,4'-dihydroxybiphenyl, 4,4'-dihydroxybiphenol, bisphenol A, bisphenol F, catechol, 4-t-butyl catechol, resorcinol, 4-hexylresorcinol, orcinol, hydroquinone, naphthalenediol, anthracenediol, biphenylenediol, phloroglucinol, phloroglucide, calixarene, and poly(4-vinylphenol).

Carboxylic acids include C₁₋₁₂ alkyl and C₅₋₁₂ aryl-containing carboxylic acids, comprising one or more carboxyl (-COOH) groups, e.g. from 1 to 3 carboxyl groups. They can comprise one or more substituents selected from halide (typically chloride), hydroxy, C₁₋₁₀ alkoxy, and nitro. Examples include C₂₋₁₀ aliphatic acids and diacids such as acetic acid, propanoic acid, butyric acid, lactic acid, malonic acid, oxalic acid, maleic acid, fumaric acid, and mono-esters of dibasic acids, and C₆₋₁₀ aryl acids such as phenylacetic acid, benzoic acid, 4-t-butyl benzoic acid, salicylic acid, 3,5-dichlorosalicylic acid, and 4-nitrobenzoic acid.

Sulfonic acids include C₁₋₁₂ alkyl and C₅₋₁₆ aryl sulfonic acids, for example methanesulfonic acid, p-toluenesulfonic acid, 4-dodecylbenzenesulfonic acid, naphthalene disulfonic acid, and di-nonyl naphthalene disulfonic acid.

Salts include salts of nitrate, sulfate, thiocyanate, naphthenate, tetrafluoroborate, triflate, halide, chlorate, bromate, iodate, perchlorate, perbromate and periodate. The cation can be metal or non-metal. Metals include alkali metals (e.g. Li, Na and K), alkaline earth metals (e.g. Mg and Ca), lanthanide metals (e.g. ytterbium) and group 12 metals (e.g. zinc). Organic ions include quaternary amine ions and heterocycles with a charged nitrogen atom in the ring (e.g. imidazolinium). Specific examples include calcium nitrate, calcium naphthenate, ammonium thiocyanate, sodium thiocyanate, potassium thiocyanate, imidazolinium thiocyanate, lithium tetrafluoroborate, lithium bromide, lithium trifluoroacetate, calcium chloride, ytterbium triflate, lithium perchlorate, zinc triflate, and lithium nitrate.

Other examples of accelerators include tertiary amines (e.g. 1,8-diaza-bicyclo[5.4.0]undec-7-ene, triethylene diamine, benzyldimethylamine, triethanolamine, dimethylaminoethanol, and tris(dimethylaminomethyl)phenol); and imidazoles (e.g. 1-methylimidazole, 2-methylimidazole, 2-phenylimidazole, 2-phenyl-4-methylimidazole, 2-ethyl-4-methyl imidazole, 2-heptadecylimidazole and diazabycyclo octane).

The accelerator(s) are suitably used in an amount of 0.1 to 5 wt% of the coating composition, e.g. 0.1 to 3 wt%.

In 2-pack coating compositions, the catalyst/accelerator is typically included in the part containing the curing agents.

### [Organic Solvents]

There can be one or more organic solvents in the coating composition. These are typically organic liquids that have a vapour pressure of more than 0.01 kPa at 25°C or a boiling point of less than 250°C at 1 atmosphere pressure (101.3 kPa). They do not react with the binder or curing components under the curing/drying conditions, and will eventually evaporate and be lost from the coating film once fully cured/dried.

The solvent content includes solvents added to the coating formulation, but does not include any volatile compounds that are created during curing (e.g. alcohols formed from hydrolysation of alkoxide moieties on any components of the coating composition).

When organic solvent is present, it can be selected from hydrocarbon compounds and heteroatom-containing organic compounds, where heteroatoms are selected from O, S and N, for example O.

Examples of organic solvents include alkyl aromatic hydrocarbons (such as xylene, toluene and trimethyl benzene), aliphatic hydrocarbons (such as cyclic and acyclic hydrocarbons selected from C₄₋₂₀ alkanes, or mixtures of any two or more thereof), alcohols (such as benzyl alcohol, octyl phenol, resorcinol, n-butanol, isobutanol and isopropanol), ethers (such as methoxypropanol), ketones (such as methyl ethyl ketone, methyl isobutyl ketone and methyl isopentyl ketone), and esters (such as butyl acetate). In embodiments, the organic solvent comprises from 2 to 20 carbon atoms, for example from 3 to 15 carbon atoms. Mixtures of any two or more organic solvents can be used.

When organic solvent is used, its amount in total can constitute up to 20wt%, for example up to 10wt% or up to 5 wt% of the coating composition as a whole. In embodiments, it is in the range of from 0.1 to 20 wt%, from 0.1 to 20 wt% or from 0.1 to 5 wt%. In further embodiments, the amount of organic solvent in the coating composition is 1 wt% or less.

The organic solvent content is separate to the water content. The coating composition is typically a non-aqueous composition. Although water can be present, it is typically at a low concentration. If present, it is typically at concentrations of 5 wt% or less, for example 1 wt% or less, such as 0.5 wt% or less, based on the coating composition as a whole.

It is possible for some solvents to have other functions. For example certain alcohols and phenols can also act as catalysts/accelerators. Therefore, the total amount of solvent also encompasses those that act as catalysts/accelerators. In addition, the total amount of catalysts/accelerators also includes those that also function as organic solvent.

### [Other Components]

In one embodiment, the coating composition of the invention comprises one or more pigments and/or fillers. These can include titanium dioxide, yellow and red iron oxide, phthalocyanine pigments, micaceous iron oxide, crystalline silica, wollastonite, barytes, talc, feldspar, and calcium carbonate.

The composition may contain one or more further ingredients, for example being selected from thickening agents or thixotropes (such as fine-particle silica, bentonite clay, hydrogenated castor oil, or a polyamide wax), plasticisers, pigments, pigment dispersants, anticorrosive agents, stabilisers, flow aids, wetting agents, defoamers, reinforcing agents (e.g. fibres, graphenes and graphites), and adhesion promotors.

### [Curing Conditions]

The coating composition is typically provided as a two-pack coating composition, wherein the first pack comprises an epoxy resin and the second pack comprises the curing agent(s).

The coating composition is curable at temperatures in the range of -20 to 50°C, with surprisingly good curing times at temperatures in the range of from -20 to 25 °C, for example from -15 to 15 °C, from -10 to 15 °C, from -15 to 0 °C, or from -10 to -1 °C.

Application of the coating can be carried out in the relative humidity range of 0 - 100%, typically in the range 20 - 80%, for example in the range 40 - 60%. Where the surface to be coated is relatively enclosed, e.g. the inside surface of a storage tank, the relative humidity during the coating operation can be controlled to reduce or avoid coating defects.

A second curing step can optionally take place, for example where the coating will come into contact with very aggressive chemicals. In this second step, sometimes referred to as a post-curing step, the coating layer is heated to a temperature of 50 °C or more for a given period, for example in the range of from 1 to 24 hours, such as 3 to 16 hours. In general, post-curing can take place at a temperature of at least 50 °C, e.g., from 50 to 150 °C. In one embodiment, post-curing takes place at a temperature in the range of from 50 to 100 °C, e.g. from 50 to 80 °C. In another embodiment, post-curing takes place at a temperature in the range of from 100 top 150 °C.

How post-curing is effected will depend on the nature of the surface to be coated, and will be evident to the person skilled in the art. For example, curing can be effected by heating the surface with hot air or hot water, e.g., by spraying. Where the surface is a storage tank internal surface, heating can also be effected by contacting the coated surface with hot cargo, using the heat from the cargo to effect the additional curing. Alternatively, the tank can be filled with hot water.

In one embodiment, the post-curing is performed by heating the surface with hot air or contacting the coated surface with hot cargo.

The curing/drying characteristics of the coating compositions adopt a good balance of drying characteristics, particularly at lower temperatures. For example, the gel time is sufficiently long such that the coating does not begin to harden too quickly, allowing operators sufficient time to apply the coating and correct any imperfections. However, the overall drying time is sufficiently short such that the coating application process is not unduly delayed.

Coating drying performance can be assessed by various means. Examples include measuring the "tack-free" time (where the film surface has dried or cured to an extent sufficient to avoid adhering to light objects), the "dry-hard" time (where the film has solidified sufficiently so that it no longer flows or sticks to a finger that touches it with a relatively strong force), or the "dry-through" or "through-dry" time (which corresponds to the film being solidified so completely that a large twisting force does not distort the film).

These times can be measured by methods such as those described in ASTM D5895 or ISO 9117-1.

In embodiments, when measured at 5 °C, the through dry time of the coating composition can be 38 hours or less, for example in the range of from 10 hours to 38 hours, such as from 15 to 30 hours. These can be measured by ISO 9117-1.

Additionally or alternatively, in embodiments the through dry time at 0°C can be 40 hours or less, for example in the range of from 10 hours to 40 hours, such as from 15 hours to 35 hours.

Additionally or alternatively, in embodiments the through dry time at -7 °C can be 60 hours or less, for example in the range of from 20 hours to 60 hours, such as from 30 hours to 55 hours.

In embodiments, at 5 °C, the tack-free time is 14.0 hours or less, and the dry-hard time is 17.5 hours or less. For example, the tack-free time can be in the range of from 5.0 to 14.0 hours, and the dry-hard time can be in the range of from 8.0 to 17.5 hours. In still further embodiments, the tack-free time can be in the range of from 7.7 to 13.5 hours and the dry-hard time can be in the range of from 9.8 to 16.0 hours. The tack-free and dry-hard times can be measured by ASTM D5895.

### [Coating Application]

The coating composition can be applied to the surface to be coated by methods known in the art. Examples of suitable methods include rolling, spraying, and brushing. Application by spraying is preferred, as it leads to efficient deposition of a homogeneous coating layer. It is a feature of the present invention that the coating composition can be formulated to have a sprayable viscosity without having to resort to substantial amounts of solvents. The composition may be applied through single feed (or single leg) airless spray technology, or via plural component application technology.

Typically, coating compositions having viscosities of 10.0 Poise or less at 25 °C are considered optimal for single leg airless spray application, for example 8.0 Poise or less. Viscosities are also typically at least 2.0 Poise at 25 °C, for example at least 4.0 Poise. Where the coating is a 2- (or more-) component composition, the viscosity is measured on a freshly mixed composition, e.g. within 5 minutes of mixing the different components together. Method ASTM D4287 can be used to determine the viscosity of the coating composition. Higher viscosities tend to reduce the quality of the film, e.g. increasing the extent of unevenness and pinholes, as well as making it more difficult and energy intensive to spray. Lower viscosities tend to increase the chances of overspray and splatter, and can also reduce the sag resistance of the film, hence reducing the maximum film thickness achievable.

Each coating layer applied may have a thickness after curing (i,e, a dry film thickness) of from 50 to 1000 micron, for example from 150 to 900 micron or from 300 to 800 micron..

The compositions are particularly suitable as protective linings for vessels, containers or associated pipework that are used to produce, store or transport liquid or gaseous bulk chemicals, including water. They are typically used in the shipping or marine industry, oil and gas industry, the chemical processing industry, the power industry, the waste and water industry, the transportation industry, and the mining and metals industry.

The surface to be coated is typically metallic, and may comprise both the internal and external surfaces of storage tanks, storage vessels, and associated pipework, flues and containment areas. In addition to the liquid or gaseous chemicals, such surfaces may be exposed to high temperatures, whether static or cycled, and also high pressures, whether static or cycled.

The compositions combine a low absorption for a wide variety of chemicals with a good washability, resulting in the coating composition being able to withstand cyclic loading with various types of liquids.

The coating composition can be applied directly to surface as a primer/finish, i.e. the composition can be used as the only type of protective coating on a surface.

It is also possible to apply the coating composition according to the invention as a primer, i.e. to first apply the coating of the invention on the surface to form a first coating layer, cure the coating layer, provide a further coating onto the first coating layer to form a second coating layer, and cure the second coating layer. The application of further coating layers is also possible, to provide three or more layers of the coating composition of the invention. Usually no more than three layers are required, with the precise number being dependent on the thickness of the individual layers. If a post-curing step is carried out, it is preferred for this to be carried out after all layers have been deposited.

In embodiments, just a single coating layer needs to be applied, as it can provide a coating film of sufficient thickness without the need for subsequent layers.

### Examples

The invention will now be illustrated with reference to the following, non-limiting examples.

Compositions of Comparative Examples 1-9 and Examples 1-4 were prepared according to the formulations set out in Tables 1 to 3. They were prepared as two-part compositions, using the same Part A, with the formulation provided in Table 1, and with Part B formulations listed in Table 2. Concentrations are in wt% unless specified otherwise.

Curing Agents:
(a) Cycloaliphatic amine - Ancamine^{™} 2264, comprising 45-55 wt% cycloaliphatic polyamine and 45-55 wt% para-amino dicyclohexyl methane (PACM)
(b) Mannich base - Ancamine^{™} 2422, comprising 60-70 wt% Mannich base derived from phenol, formaldehyde and meta xylylene diamine (MXDA), and 30-40 wt% MXDA
(c) Cycloaliphatic amine: 1,2 diaminocyclohexane
(d) Non-cyclic aliphatic amine - TETA (triethylenetetramine)

Crosslinking Agents:
(a) Dynasylan^{™} GLYMO - (3-glycidoxypropyl trimethoxysilane)
(b) Dynasylan^{™} AMEO - (3-aminopropyl triethoxysilane)

Catalyst:
Huntsman Accelerator 2950CH^{™} - a mixture of 10-30 wt% 2,4,6-tris(dimethylaminomethyl)phenol and 70-90 wt% Mannich base derived from phenol, formaldehyde and N,N-dimethyl-1,3-propanediamine.

Epoxy Resin:
Bisphenol F epoxy resin (Epikote^{™} 862)

Pigments and Fillers: selected from titania, iron oxide, alkali alumina silicate, nepheline syenite and mica

Other components: solvents, dispersants, thixotropic agents and textural agents

The Part A and Part B compositions were separately prepared, by blending the respective ingredients together.

**Table 1 - Part A Formulation For All Examples**

| Material | Amount (wt%) |
|---|---|
| Epoxy Resin | 24.9 |
| Crosslinking Agent (a) | 14.5 |
| Pigments & Fillers | 51.6 |
| Others | 9.0 |
| Solids Content ^{[1]} | 99.2 |

| | |
|---|---|
| ^{[1]} Proportion (wt%) of non-volatile material | |

**Table 2 - Part B Formulations**

| Comp. Examples | Amount (wt%) | | | | | | | | |
|---|---|---|---|---|---|---|---|---|---|
| | C.Ex. 1 | C.Ex. 2 | C.Ex. 3 | C.Ex. 4 | C.Ex. 5 | C.Ex. 6 | C.Ex. 7 | C.Ex. 8 | C.Ex. 9 |
| Curing Agent (a) | 43.2 | 100.0 | 0.0 | 25.0 | 0.0 | 0.0 | 37.5 | 27.5 | 0.0 |
| Curing Agent (b) | 0.0 | 0.0 | 100.0 | 75.0 | 83.0 | 26.9 | 37.5 | 27.5 | 50.0 |
| Curing Agent (c) | 0.0 | 0.0 | 0.0 | 0.0 | 0.0 | 6.7 | 0.0 | 0.0 | 0.0 |
| Curing Agent (d) | 0.0 | 0.0 | 0.0 | 0.0 | 0.0 | 0.0 | 25.0 | 45.0 | 0.0 |
| Crosslinkin g Agent (b) | 6.1 | 0.0 | 0.0 | 0.0 | 0.0 | 5.4 | 0.0 | 0.0 | 0.0 |
| Pigment & Fillers | 44.3 | 0.0 | 0.0 | 0.0 | 0.0 | 47.8 | 0.0 | 0.0 | 0.0 |
| Others | 6.4 | 0.0 | 0.0 | 0.0 | 0.0 | 7.0 | 0.0 | 0.0 | 0.0 |
| Triethyl Borate | 0.0 | 0.0 | 0.0 | 0.0 | 0.0 | 6.2 | 0.0 | 0.0 | 0.0 |
| Catalyst | 0.0 | 0.0 | 0.0 | 0.0 | 17.0^{[1]} | 0.0 | 0.0 | 0.0 | 50.0 |
| Solids Content (wt%) | 100 | 100 | 100 | 100 | 100 | 100 | 100 | 100 | 100 |
| | | | | | | | | | |

| Examples | Ex.1 | Ex.2 | Ex.3 | Ex.4 | | | | | |
|---|---|---|---|---|---|---|---|---|---|
| Curing Agent (a) | 75.0 | 19.1 | 21.2 | 50.0 | | | | | |
| Curing Agent (b) | 25.0 | 19.1 | 21.2 | 50.0 | | | | | |
| Curing Agent (c) | 0.0 | 0.0 | 0.0 | 0.0 | | | | | |
| Curing Agent (d) | 0.0 | 0.0 | 0.0 | 0.0 | | | | | |
| Crosslinkin g Agent (b) | 0.0 | 6.7 | 7.4 | 0.0 | | | | | |
| Pigment & Fillers | 0.0 | 48.6 | 37.2 | 0.0 | | | | | |
| Others | 0.0 | 6.5 | 7.3 | 0.0 | | | | | |
| Triethyl Borate | 0.0 | 0.0 | 5.8 | 0.0 | | | | | |
| Catalyst | 0.0 | 0.0 | 0.0 | 0.0 | | | | | |
| Solids Content (wt%) | 100 | 100 | 100 | 100 | | | | | |

| | | | | | | | | | |
|---|---|---|---|---|---|---|---|---|---|
| ^{[1]} This provides 11.9 - 15.3 wt% aromatic Mannich base, and 1.7 - 5.1 wt% tertiary amine | | | | | | | | | |

| Table 3 - Coating Compositions | | | | | | | | | |
|---|---|---|---|---|---|---|---|---|---|
| | C.Ex. 1 | C.Ex. 2 | C.Ex. 3 | C.Ex. 4 | C.Ex. 5 | C.Ex. 6 | C.Ex. 7 | C.Ex. 8 | C.Ex. 9 |
| Part.A/Part B ^{[1]} | 2.3 | 5.0 | 5.5 | 5.3 | 4.8 | 2.2 | 6.52 | 7.61 | 2.45 |
| MB/CA ^{[2],[3]} | 0.0 | 0.0 | N/A | 1.8 - 2.1 | N/A | 2.4 - 2.8 | 0.6 - 0.7 | 0.6 - 0.7 | 0.7 - 0.9 |
| Proportion other curing agents ^{[3],[4]} | 0.0 | 0.0 | 30 - 40 | 23 - 30 | 25 - 35 | 24 - 32 | 30 - 40 | 36 - 40 | 53 - 56 |
| Other curing agents (wt%) ^{[3],[5]} | 0.0 | 0.0 | 4.6 - 6.2 | 3.6 - 4.8 | 4.3-5.7 | 2.5-3.4 | 4.8-5.3 | 6.2-6.5 | 0.0 |
| Epoxy compounds (wt parts) | 39.4 | 39.4 | 39.4 | 39.4 | 39.4 | 39.4 | 39.4 | 39.4 | 39.4 |
| 1°+2° Amines (wt parts) ^{[6]} | 21.4 | 20.0 | 18.2 | 18.9 | 19.8 - 20.5 | 17.9 | 15.3 | 13.1 | 34.7 - 38.8 |
| Epoxy / 1⁰+2⁰ Amines (wt ratio)^{[6]} | 1.8 | 2.0 | 2.2 | 2.1 | 1.9 - 2.0 | 2.2 | 2.6 | 3.0 | 1.1 - 1.0 |
| NH/Epoxy mole ratio ^{[7]} | 177 | 177 | 177 | 177 | 177 | 181 | 178 | 178 | 178 |
| Solids Content Pt.A + Pt.B (wt%) | 99.4 | 99.3 | 99.3 | 99.3 | 99.3 | 99.5 | 99.3 | 99.3 | 99.4 |
| | | | | | | | | | |

| | Ex.1 | Ex.2 | Ex.3 | Ex.4 | | | | | |
|---|---|---|---|---|---|---|---|---|---|
| Part.A/Part B ^{[1]} | 5.1 | 2.1 | 2.4 | 5.2 | | | | | |
| MB/CA ^{[2],[3]} | 0.2 | 0.6 - 0.7 | 0.6 - 0.7 | 0.6 - 0.7 | | | | | |
| Proportion other curing agents ^{[3],[4]} | 7.5 - 10 | 15 - 20 | 15 - 20 | 15 - 20 | | | | | |
| Other curing agents (wt%) ^{[3],[5]} | 1.2 - 1.6 | 1.8 - 2.5 | 1.9 - 2.5 | 2.4 - 3.2 | | | | | |
| Epoxy Compounds (wt parts) | 39.4 | 39.4 | 39.4 | 39.4 | | | | | |
| 1°+2° Amine Compounds (wt parts) ^{[6]} | 19.6 | 21.4 | 20.8 | 19.2 | | | | | |
| Epoxy / 1⁰+2⁰ Amine (wt ratio)^{[6]} | 2.0 | 1.8 | 1.9 | 2.1 | | | | | |
| NH/Epoxy mole ratio ^{[7]} | 177 | 179 | 178 | 177 | | | | | |
| Solids Content Pt.A + Pt.B (wt%) | 99.3 | 99.5 | 99.4 | 99.3 | | | | | |

| | | | | | | | | | |
|---|---|---|---|---|---|---|---|---|---|
| ^{[1]} Part A to Part B weight ratio ^{[2]} Weight of Mannich Base (MB) per unit weight of Cycloaliphatic Amine (CA). ^{[3]} A range is provided based on the Ancamine^{™} 2422 Safety Data Sheet specifying the presence of 30-40 wt% m-phenylenebis(methylamine), and also the range of materials specified for Huntsman Accelerator 2950CH^{™} ^{[4]} Proportion (wt%) of curing agent other than cycloaliphatic amine and aromatic Mannich base curing agents based on the total weight of curing agent ^{[5]} Concentration (wt%) of curing agent other than cycloaliphatic amine and aromatic Mannich base curing agents based on the coating composition as a whole ^{[6]} 1°+2° amine compounds refers to compounds comprising primary and secondary amine groups ^{[7]} molar ratio of active (N-H) hydrogens to epoxy groups in the coating composition | | | | | | | | | |

Experiments were carried out to test the drying time performance at various temperatures, in addition to gel time, viscosity, and chemical resistance to a variety of liquids.

### [Experiment 1 -Through dry Times]

Through dry times were determined by the method detailed in ISO9117-1, employing a base plate and plunger assembly, where the plunger was rubber-tipped and covered with a nylon gauze, and had a mass of 1.5kg. Binder (part A) and curing (part B) components were separately prepared by mixing the constituent components. The part A and part B components were then mixed together and applied by a bar applicator to a glass sample plate at a wet film thickness of 600 µm. They were then placed in an environmental cabinet at the temperature specified in Table 3 and checked hourly until the sample was dry to the touch. The samples were then assessed by allowing the plunger to sit on the surface of the dried coating film for 10s, before rotating the plunger through 90° and removing it from the surface. If a mark on the coating was observed, the sample was placed back in the environmental cabinet for an additional 30 minutes before being retested in the same way. This step was repeated until no mark was observed. The through dry time was recorded as the first interval at which no mark was left upon the coating. Results are shown in Table 3.

**Table 4 -Through Dry Times at Different Temperatures**

| | Through Dry Time (hours) | | | |
|---|---|---|---|---|
| Example | -7 °C | 0 °C | 5 °C | 15 °C |
| Comparative Example 1 | N.R.^{[1]} | N.R.^{[1]} | 40 | 16 |
| Example 2 | 47 | 26 | 23 | 16 |
| Example 3 | 44 | 18 | 18 | 16 |

| | | | | |
|---|---|---|---|---|
| ^{[1]} No result - the through-dry state was not observed below 5 °C | | | | |

This experiment demonstrates that Examples 2 and 3 have superior (faster) through dry times at low temperatures.

### [Experiment 2 - Tack-free and Dry-Hard Times]

These were determined by a method representative of ASTM D5895. Binder (part A) and curing (part B) components were separately prepared and, after being mixed together, applied at a wet film thickness of 600µm by a cube applicator onto a 30cm long glass sample. They were then placed onto an automatic mechanical recorder operating within an environmental cabinet at the temperature specified in Table 5. A floating needle on the recorder was applied to the surface of the wet film, and gradually drawn at a constant rate through and eventually over the drying/curing film. Generally, at the initial stages, no mark is seen because the coating composition flows back into the furrow created by the needle. At a certain point, the coating composition is hard enough to maintain the shape of the furrow created by the needle. At a further point, the composition is sufficiently hard that the furrow edges begin to tear. This tear-point is taken as the tack-free time. At a later point in time, the tear ends, and the coating is sufficiently hard such that the needle rides up onto the surface of the hardened coating. This point is taken as the dry-hard time.

**Table 5 - Tack-Free and Dry-Hard Times at 5 °C**

| Example | Tack-free Time (hours) | Dry-Hard Time (hours) |
|---|---|---|
| Comparative Example 2 | 11.0 | 19.0 |
| Comparative Example 3 | 4.6 | 7.8 |
| Comparative Example 4 | 7.5 | 9.5 |
| Comparative Example 5 | 6.7 | 8.3 |
| Comparative Example 7 | 6.8 | 12.0 |
| Comparative Example 8 | 8.5 | 15.0 |
| Comparative Example 9 | 2.0 | 6.0 |
| Example 1 | 11.5 | 13.5 |
| Example 4 | 8.0 | 10.5 |

These experiments demonstrate that the inventive coating compositions have acceptable drying characteristics at low temperatures. In combination with the gel-time results (see below), the inventive coating compositions have a good balance of drying characteristics, such that they do not gel too quickly, yet do not have excessively long drying/curing times.

### [Experiment 3 - Gel Time]

Gel times were determined using a digital Shyodu Gel Timer. The test was conducted inside an environmental cabinet held at 25 °C. Part A and Part B components were separately prepared, sufficient to form 200 ml of coating composition. The two parts were added to a sample container, at which point a timer was started. The sample was then mixed using a stirrer, and the rotating hook of the gel timer apparatus was inserted into the coating composition. The gel time was automatically determined by the apparatus, being based on the time at which the composition became too viscous for the hook to easily rotate. Results are shown in Table 5.

Gel time is related to pot life. Generally, a higher gel time/pot life is desirable since this increases the working time for the coating (before drying) is not too restricted. However, because the gel time is also related to drying time, then it should not be excessively high. As can be seen from table 6, Examples 1-4 show optimum gel times that fall between the shorter and longer gel times of Comparative Examples 1-8. Although Comparative Example 9 exhibits reasonable gel times, it has a comparatively very high viscosity (c.f. Experiment 4) which makes it unsuitable for airless spray application, and in particular single leg airless spray application.

**Table 6 - Gel Times**

| Example | Gel Time (minutes) |
|---|---|
| Comparative Example 1 | 150 |
| Comparative Example 2 | 199 |
| Comparative Example 3 | 61 |
| Comparative Example 4 | 69 |
| Comparative Example 5 | 49 |
| Comparative Example 6 | 79 |
| Comparative Example 7 | 64 |
| Comparative Example 8 | 67 |
| Comparative Example 9 | 116 |
| Example 1 | 135 |
| Example 2 | 118 |
| Example 3 | 108 |
| Example 4 | 92 |

### [Experiment 4 - Viscosity]

Viscosity was determined by a method representative of ASTM D4287 and ISO 2884/1, using a cone and plate viscometer at a shear rate of 10 000 s⁻¹. Part A and Part B components of the coating composition were prepared separately and preconditioned at 25°C in an incubator prior to testing. They were then mixed and immediately tested. The viscometer tests were carried out at 25°C using 0.2 ml of coating composition. Results are shown in Table 6.

**Table 7 - Viscosity (Poise)**

| Example | Part A | Part B | Mixture |
|---|---|---|---|
| Comparative Example 1 | 4.1 | 17.7 | 6.7 |
| Comparative Example 2 | 4.1 | 16.9 | 5.8 |
| Comparative Example 3 | 4.1 | 18.1 | 7.0 |
| Comparative Example 4 | 4.1 | 15.4 | 7.3 |
| Comparative Example 5 | 4.1 | 22.1 | 6.9 |
| Comparative Example 6 | 4.1 | 19.9 | 6.6 |
| Comparative Example 7 | 4.1 | 1.6 | 3.8 |
| Comparative Example 8 | 4.1 | 3.7 | 5.9 |
| Comparative Example 9 | 4.1 | 29.7 | 10.3 |
| Example 1 | 4.1 | 14.0 | 6.2 |
| Example 2 | 4.1 | 22.5 | 7.7 |
| Example 3 | 4.1 | 17.4 | 6.8 |
| Example 4 | 4.1 | 13.9 | 6.9 |

This experiment demonstrates that the coating materials, when mixed, have a viscosity suitable for spray application, except for Comparative Example 9 which has a high viscosity that would make airless spray application difficult.

### [Experiment 5 - Chemical Resistance]

The procedure used corresponds to ISO 2812 Part 1, Method A. The part A and part B of each composition were mixed and spray applied (using airless spray equipment) onto both sides of 150 mm x 100 mm x 3 mm carbon steel test panels that had been precleaned and grit-blasted to ISO8501 Sa 2 ½, with a surface profile of >75µm. The samples were conditioned for 7 days at 23 °C, before being immersed in various test liquids for a period of 12 months at specified temperatures. The samples were assessed visually at 1, 3, 6 and 12 month intervals for defects before being removed and tested for adhesion according to the pull-off test of ISO 4624.

Examples 2 and 3 and Comparative Examples 1 and 6 were tested. Examples 2 and 3 and Comparative Example 1 exhibited 6 months' chemical resistance performance to crude oil (up to 80 °C), distilled water (up to 98 °C) a water/amine mixture (up to 80 °C), water/monoethylene glycol mixtures (up to 95 °C) and acidic water at pH 2 (up to 90 °C). Comparative Example 6 achieved a similar result for the distilled water test, but failed in the crude oil, acidic water, water/monoethylene glycol mixture and water/amine mixture tests.

Samples of Examples 2 and 3 and Comparative Example 1 were also subjected to autoclave tests according to NACE TM0185. All three examples gave 1 month protection at 150 °C in 3% wt% aqueous NaCl.

Similarly, all three samples provided 1 month protection at 150 °C in a liquid phase comprising 95 wt% crude oil and 5 wt% of a 3 wt% aqueous NaCl solution that was pressurized 17 bar of a gas mixture comprising 10 vol% H₂S, 10 vol% CO₂ and 80 vol% CH₄.

These tests show that the inventive samples exhibit effective protective performance for a variety of different liquids.

## Claims

1. A coating composition comprising a binder component and a curing component, the binder component comprising an epoxy resin, and the curing component comprising a cycloaliphatic amine and an aromatic Mannich base curing agent, the cycloaliphatic amine and the aromatic Mannich base curing agent each having either a primary amine group, a secondary amine group or both, wherein:
the weight ratio of aromatic Mannich base curing agent(s) to cycloaliphatic amine curing agent(s) is in the range of from 0.01 : 1.00 to 1.70 : 1.00;
the aromatic Mannich base curing agent is derived from an aldehyde, a phenol compound and an amine comprising at least one aromatic ring; and
the proportion of cycloaliphatic amine curing agent(s) and aromatic Mannich base curing agent(s) is 70 wt% or more based on the total amount of curing agents.

2. A coating composition according to claim 1, in which the weight ratio of aromatic Mannich base curing agent(s) to cycloaliphatic amine curing agent(s) is at least 0.10 : 1.00 and/or is 1.50 : 1.00 or less.

3. A coating composition according to claim 1 or claim 2, in which the epoxy resin is a bisphenol F epoxy resin.

4. A coating composition according to any one of claims 1 to 3, in which the cycloaliphatic amine is a cycloaliphatic polyamine and/or the aromatic Mannich base is derived from meta-xylylene diamine (MXDA), formaldehyde and phenol.

5. A coating composition according to any one of claims 1 to 4, which is suitable for application by single leg airless spraying.

6. A coating composition according to any one of claims 1 to 5, which is a protective liner for internal surfaces of vessels used for chemical storage or chemical transport.

7. A coating composition according to any one of claims 1 to 6, in which;
(i) the weight ratio of epoxy group-containing compounds to compounds comprising a primary and/or secondary amine groups is 2.4 : 1.0 or less; and/or
(ii) the molar ratio of active (N-H) hydrogens to epoxy groups in the coating composition is in the range of from 0.50:1.00 to 2.00:1.00.

8. A coating composition according to any one of claim 1 to 7, in which one or more of the following conditions apply:
(i) the through dry time of the coating composition at 5 °C is 38 hours or less;
(ii) the through dry time of the coating composition at 0 °C is 40 hours or less;
(iii) the through dry time of the coating composition at -7 °C is 60 hours or less;
(iv) the tack-free time at 5 °C is 14.0 hours or less and the dry-hard time is 17.5 hours or less;
where through dry time is determined by ISO9117-1, and the tack-free and dry-hard times are determined by ASTM D5896.

9. A coating composition according to any one of claims 1 to 8, in which the coating composition is a protective lining coating.

10. A coating composition according to any one of claims 1 to 9, comprising at least one organoboron compound.

11. A coating composition according to claim 10, in which the concentration of the organoboron compound in the coating composition is in the range of from 0.1 to 15 wt%.

12. A substrate coated with a coating composition according to any one of claims 1 to 11.

13. A substrate according to claim 12, in which the substrate is an internal surface of a tank or vessel for storage or transport of water or chemicals.

14. A method of coating a substrate comprising applying a coating composition according to any one of claims 1 to 11 to the substrate and allowing the coating composition to cure.

15. The method according to claim 14, in which the substrate is an internal surface of a vessel for storage or transport of water or chemicals and/or where the coating composition is cured at a temperature in the range of from -15 to 15 °C.

## Patentansprüche

1. Beschichtungszusammensetzung umfassend eine Bindemittelkomponente und eine Härtungskomponente, wobei die Bindemittelkomponente ein Epoxidharz umfasst und die Härtungskomponente ein cycloaliphatisches Amin und einen aromatischen Mannich-Base-Härter umfasst, wobei das cycloaliphatische Amin und der aromatische Mannich-Base-Härter jeweils entweder eine primäre Amingruppe, eine sekundäre Amingruppe oder beides aufweisen, wobei:
das Gewichtsverhältnis von aromatischem Mannich-Base-Härter zu cycloaliphatischem Aminhärter in dem Bereich von 0,01 : 1,00 bis 1,70 : 1,00 liegt;
der aromatische Mannich-Base-Härter abgeleitet ist von einem Aldehyd, einer Phenolverbindung und einem Amin, das wenigstens einen aromatischen Ring umfasst; und
der Anteil an cycloaliphatischem Aminhärter und aromatischem Mannich-Base-Härter wenigstens 70 Gew.-% oder mehr, bezogen auf die Gesamtmenge an Härtern, beträgt.

2. Beschichtungszusammensetzung nach Anspruch 1, wobei das Gewichtsverhältnis von aromatischem Mannich-Base-Härter zu cycloaliphatischem Aminhärter wenigstens 0,10 : 1,00 beträgt und/oder 1,50 : 1,00 oder weniger beträgt.

3. Beschichtungszusammensetzung nach Anspruch 1 oder Anspruch 2, wobei das Epoxidharz ein Bisphenol-F-Epoxidharz ist.

4. Beschichtungszusammensetzung nach einem der Ansprüche 1 bis 3, wobei das cycloaliphatische Amin ein cycloaliphatisches Polyamin ist und/oder die aromatische Mannich-Base abgeleitet ist von meta-Xylylendiamin (MXDA), Formaldehyd und Phenol.

5. Beschichtungszusammensetzung nach einem der Ansprüche 1 bis 4, die zum Aufbringen durch Single-Leg-Airless-Sprühen geeignet ist.

6. Beschichtungszusammensetzung nach einem der Ansprüche 1 bis 5, die ein Schutzauskleidung für Innenflächen von Gefäßen ist, die zur Chemikalienlagerung oder zum Chemikalientransport verwendet werden.

7. Beschichtungszusammensetzung nach einem der Ansprüche 1 bis 6, wobei:
(i) das Gewichtsverhältnis von epoxidgruppenhaltigen Verbindungen zu Verbindungen, die primäre und/oder sekundäre Amingruppen umfassen, 2,4 : 1,0 oder weniger beträgt; und/oder
(ii) das Molverhältnis von aktiven (N-H)-Wasserstoffen zu Epoxidgruppen in der Beschichtungszusammensetzung in dem Bereich von 0,50:1,00 bis 2,00:1,00 liegt.

8. Beschichtungszusammensetzung nach einem der Ansprüche 1 bis 7, wobei eine oder mehrere der folgenden Bedingungen erfüllt sind:
(i) die Durchtrocknungszeit der Beschichtungszusammensetzung bei 5 °C beträgt 38 Stunden oder weniger;
(ii) die Durchtrocknungszeit der Beschichtungszusammensetzung bei 0 °C beträgt 40 Stunden oder weniger;
(iii) die Durchtrocknungszeit der Beschichtungszusammensetzung bei -7 °C beträgt 60 Stunden oder weniger;
(iv) die klebfreie Zeit bei 5 °C beträgt 14,0 Stunden oder weniger und die trocken-hart-Zeit beträgt 17,5 Stunden oder weniger;
wobei die Durchtrocknungszeit nach ISO9117-1 bestimmt wird und die klebfreie und trocken-hart-Zeit nach ASTM D5896 bestimmt werden.

9. Beschichtungszusammensetzung nach einem der Ansprüche 1 bis 8, wobei die Beschichtungszusammensetzung eine Schutzauskleidungsbeschichtung ist.

10. Beschichtungszusammensetzung nach einem der Ansprüche 1 bis 9, umfassend wenigstens eine Organoborverbindung.

11. Beschichtungszusammensetzung nach Anspruch 10, wobei die Konzentration der Organoborverbindung in der Beschichtungszusammensetzung in dem Bereich von 0,1 bis 15 Gew.-% liegt.

12. Substrat, beschichtet mit einer Beschichtungszusammensetzung nach einem der Ansprüche 1 bis 11.

13. Substrat nach Anspruch 12, wobei das Substrat eine Innenoberfläche eines Tanks oder Behälters zum Lagern oder Transport von Wasser oder Chemikalien ist.

14. Verfahren zum Beschichten eines Substrats, umfassend Aufbringen einer Beschichtungszusammensetzung nach einem der Ansprüche 1 bis 11 auf das Substrat und Härtenlassen der Beschichtungszusammensetzung.

15. Verfahren nach Anspruch 14, wobei das Substrat eine Innenoberfläche eines Behälters zum Lagern oder Transport von Wasser oder Chemikalien ist und/oder wobei die Beschichtungszusammensetzung bei einer Temperatur in dem Bereich von -15 bis 15 °C gehärtet wird.

## Revendications

1. Composition de revêtement comprenant un composant liant et un composant de durcissement, le composant liant comprenant une résine époxy, et le composant de durcissement comprenant une amine cycloaliphatique et un agent de durcissement à base de Mannich aromatique, l'amine cycloaliphatique et l'agent de durcissement à base de Mannich aromatique ayant chacun un groupe amine primaire, un groupe amine secondaire ou les deux,
le rapport pondéral du ou des agents de durcissement à base de Mannich aromatique et du ou des agents de durcissement de type amine cycloaliphatique étant dans la plage de 0,01 : 1,00 à 1,70 : 1,00 ;
l'agent de durcissement à base de Mannich aromatique étant dérivé d'un aldéhyde, d'un composé phénolique et d'une amine comprenant au moins un cycle aromatique ; et
la proportion du ou des agents de durcissement de type amine cycloaliphatique et du ou des agents de durcissement à base de Mannich aromatique étant de 70 % en poids ou plus par rapport à la quantité totale d'agents de durcissement.

2. Composition de revêtement selon la revendication 1, dans laquelle le rapport pondéral du ou des agents de durcissement à base de Mannich aromatique par rapport à ou aux agents de durcissement de type amine cycloaliphatique est d'au moins 0,10 : 1,00 et/ou est de 1,50 : 1,00 ou moins.

3. Composition de revêtement selon la revendication 1 ou la revendication 2, dans laquelle la résine époxy est une résine époxy bisphénol F.

4. Composition de revêtement selon l'une quelconque des revendications 1 à 3, dans laquelle l'amine cycloaliphatique est une polyamine cycloaliphatique et/ou la base de Mannich aromatique est dérivée de la méta-xylylène diamine (MXDA), du formaldéhyde et du phénol.

5. Composition de revêtement selon l'une quelconque des revendications 1 à 4, qui est appropriée pour une application par pulvérisation sans air à ligne unique.

6. Composition de revêtement selon l'une quelconque des revendications 1 à 5, qui est un revêtement protecteur pour les surfaces internes de récipients utilisés pour le stockage de produits chimiques ou le transport de produits chimiques.

7. Composition de revêtement selon l'une quelconque des revendications 1 à 6, dans laquelle ;
(i) le rapport pondéral des composés contenant un groupe époxy aux composés comprenant des groupes amine primaire et/ou secondaire est de 2,4 : 1,0 ou moins ; et/ou
(ii) le rapport molaire des hydrogènes actifs (N-H) aux groupes époxy dans la composition de revêtement est dans la plage de 0,50:1,00 à 2.00:1,00.

8. Composition de revêtement selon l'une quelconque des revendications 1 à 7, dans laquelle une ou plusieurs des conditions suivantes s'appliquent :
(i) le temps de séchage de la composition de revêtement à 5 °C est de 38 heures ou moins ;
(ii) le temps de séchage de la composition de revêtement à 0 °C est de 40 heures ou moins ;
(iii) le temps de séchage de la composition de revêtement à -7 °C est de 60 heures ou moins ;
(iv) le temps hors poussière à 5 °C est de 14,0 heures ou moins et le temps de séchage en profondeur est de 17,5 heures ou moins ;
lorsque le temps de séchage est déterminé par ISO9117-1, et les temps hors poussière et de séchage en profondeur sont déterminés par ASTM D5896.

9. Composition de revêtement selon l'une quelconque des revendications 1 à 8, dans laquelle la composition de revêtement est un revêtement de revêtement protecteur.

10. Composition de revêtement selon l'une quelconque des revendications 1 à 9, comprenant au moins un composé organoboron.

11. Composition de revêtement selon la revendication 10, dans laquelle la concentration du composé organoboron dans la composition de revêtement est comprise entre 0,1 et 15 % en poids.

12. Substrat revêtu par une composition de revêtement selon l'une quelconque des revendications 1 à 11.

13. Substrat selon la revendication 12, dans lequel le substrat est une surface interne d'un réservoir ou d'un récipient pour le stockage ou le transport d'eau ou de produits chimiques.

14. Procédé de revêtement d'un substrat comprenant l'application d'une composition de revêtement selon l'une quelconque des revendications 1 à 11 sur le substrat et le fait de laisser durcir la composition de revêtement.

15. Procédé selon la revendication 14, dans lequel le substrat est une surface interne d'un récipient pour le stockage ou le transport d'eau ou de produits chimiques et/ou où la composition de revêtement est durcie à une température comprise entre -15 et 15 °C.
